# EUROPÄISCHE PATENTSCHRIFT

(11) **EP 3 107 674 B1**
(45) Veröffentlichungstag und Bekanntmachung des Hinweises auf die Patenterteilung: **07.03.2018**
(21) Anmeldenummer: 14806571.7
(22) Anmeldetag: 25.11.2014
(51) Int. Cl.: B23B 27/04, B23B 29/04, B23B 27/16

(54) **WERKZEUG ZUR SPANENDEN BEARBEITUNG EINES WERKSTÜCKS**
TOOL FOR MACHINING A WORKPIECE
OUTIL POUR L'USINAGE D'UNE PIÈCE PAR ENLÈVEMENT DE COPEAUX

(30) Priorität: 18.02.2014 DE 102014102019
(43) Veröffentlichungstag der Anmeldung: 28.12.2016
(73) Patentinhaber: Hartmetall-Werkzeugfabrik Paul Horn GmbH, 72072 Tübingen (DE)
(72) Erfinder: LUIK, Matthias, 72766 Reutlingen (DE); STEINHILBER, Marc, 72116 Mössingen (DE)
(74) Vertreter: Witte, Weller & Partner Patentanwälte mbB
(86) Internationale Anmeldenummer: PCT/EP2014/075571
(87) Internationale Veröffentlichungsnummer: WO 2015/124228

(56) Entgegenhaltungen:
- DE-A1- 3 204 693
- US-A- 2 101 158
- US-A- 3 596 337

## Beschreibung

Die vorliegende Erfindung betrifft ein Werkzeug gemäß dem Oberbegriff des Anspruchs 1. Ein solches Werkzeug zur spanenden Bearbeitung eines Werkstücks, insbesondere zum axialen Einstechdrehen, ist beispielsweise aus DE 32 04 693 A1 bekannt. Die DE 32 04 693 A1 offenbart ein Werkzeug mit einem Schneideinsatz und einem Werkzeughalter, welcher einen Grundkörper, einen oberen Klemmfinger und einen unteren Klemmfinger aufweist, wobei sich der Grundkörper im Wesentlichen entlang einer Längsrichtung (x) von einem halterseitigen Ende zu einem werkstückseitigen Ende erstreckt. Zumindest ein Teil des unteren Klemmfingers springt über das werkstückseitige Ende des Grundkörpers hervor. Der obere Klemmfinger und der untere Klemmfinger bilden gemeinsam eine Aufnahme für den Schneideinsatz, in welcher der Schneideinsatz mittels eines Betätigungselements derart festlegbar ist, dass der obere Klemmfinger über eine an diesem angeordnete obere Klemmfläche eine Klemmkraft auf den Schneideinsatz ausübt.

Werkzeuge der vorliegenden Art kommen meist bei Anwendungen zur Metallbearbeitung, insbesondere bei Drehbearbeitungen, zum Einsatz. Typischerweise wird der Schneideinsatz hierbei von dem Werkzeughalter gehalten. Der Werkzeughalter ist seinerseits mittels einer entsprechenden Fixierung oder Haltevorrichtung mit einer Werkzeugmaschine verbunden, welche eine Bewegung relativ zu einem Werkstück erlaubt. Hierbei wird das Werkstück zumeist rotatorisch in Bezug zu dem Schneideinsatz angetrieben, so dass der Schneideinsatz beim Kontakt mit dem Werkstück von diesem Material abtragen kann.

Axiales Einstechdrehen bezeichnet die spanende Bearbeitung des Werkstücks parallel zur Rotationsachse des Werkstücks, wobei üblicherweise ein Vorschub des Werkzeugs oder des Werkstücks in Axialrichtung erfolgt und beispielsweise eine Ringnut gedreht beziehungsweise eingestochen wird. Axiales Einstechdrehen wird auch als Längs-Stech-Drehen bezeichnet.

Um Kosten und Beschaffungszeit zu sparen, geht die Tendenz im Bereich der spanabhebenden Werkzeuge zu Werkzeugen, welche ein größtmögliches Einsatzspektrum abdecken können. Insbesondere beim axialen Einstechdrehen, aber auch bei weiteren Drehverfahren, kommt es häufig zu Stabilitätsproblemen beziehungsweise zu einem Aufschwingen des Werkzeugs, wodurch Einstechtiefe und Schnittgeschwindigkeit begrenzt werden. Deswegen ist eine stabile Konstruktion des Werkzeugs erforderlich. Der Einsatz von Schneideinsätzen höherer Festigkeit ist dabei nur bedingt möglich. Effektiver und wirtschaftlicher ist oft die Optimierung des den Schneideinsatz haltenden Werkzeughalters, insbesondere durch die Bereitstellung einer Unterstützung für den Schneideinsatz. Insbesondere bei Anwendungen, die eine relativ große Einstechtiefe mit einer relativ geringen Breite erfordern, ist die Stabilität des Werkzeugs von großer Bedeutung. Eine höhere Stabilität des Werkzeugs führt zu einer besseren Laufruhe, welche sich positiv auf Standzeit und Vorschub- beziehungsweise Schnittgeschwindigkeit auswirken kann.

In bisherigen Ausführungen solcher Werkzeuge zum Einstechdrehen weist der Werkzeughalter üblicherweise einen Grundkörper auf, an welchem ein oberer Klemmfinger sowie ein unterer Klemmfinger zur Aufnahme des Schneideinsatzes vorgesehen sind. Zumeist wird der Schneideinsatz dabei zwischen dem oberen Klemmfinger und dem unteren Klemmfinger dadurch festgelegt, dass mittels des oberen Klemmfingers eine Klemmkraft auf den Schneideinsatz ausgeübt wird. Um einen festen Sitz des Schneideinsatzes zu erreichen, ist es dabei erforderlich, dass die Klemmkraft ausreichend stark ist.

Ein Nachteil einer hohen Klemmkraft ist jedoch, dass der untere Klemmfinger, welcher auch als Unterstützung bezeichnet wird, entsprechend stabil ausgeführt sein muss, um die Klemmkraft, welche auf ihn durch den Schneideinsatz wirkt, aufnehmen zu können. Eine stabile Unterstützung kann in verschiedenen Anwendungen jedoch nur schwierig oder aus verschiedenen Gründen überhaupt nicht erreicht werden.

Die Unterstützung beim axialen Einstechdrehen ist im Wesentlichen sichelförmig bzw. bogenförmig ausgestaltet wobei der Radius des Kreisbogens auch dem Radius der gewünschten Ringnut entspricht. Wenn nicht nur eine vorgegebene Dimensionierung einer Ringnut möglich sein soll, ist es erforderlich, dass die Unterstützung einen unterschiedlichen Innen- und Außenradius aufweist. Hierdurch können dann Ringnuten mit verschiedenen Radien erreicht werden, was im Sinne eines flexibel einsetzbaren Werkzeugs oftmals gewünscht ist. Durch die sichelförmige Ausgestaltung der Unterstützung kann die Unterstützung demnach nicht beliebig groß dimensioniert und damit stabil ausgelegt werden. Daher ergibt sich eine Abwägung zwischen der Stabilität der Unterstützung beziehungsweise des unteren Klemmfingers sowie der Auslegung der durch den oberen Klemmfinger ausgeübten Klemmkraft. Diese Abwägung ist insbesondere beim axialen Einstechdrehen kleiner Radien sowie bei relativ großen Einstechtiefen von hoher Relevanz.

Es ist daher die Aufgabe der vorliegenden Erfindung, ein Werkzeug zur spanenden Bearbeitung eines Werkstücks zu optimieren. Insbesondere soll das Werkzeug dahingehend optimiert werden, dass ein axiales Einstechdrehen auch bei kleinen Radien und/oder größeren Einstechtiefen möglich ist. Es ist weiterhin eine Aufgabe der vorliegenden Erfindung, die Stabilität eines Werkzeugs zur spanenden Bearbeitung eines Werkstücks zu verbessern, um damit das Einsatzspektrum des Werkzeugs zu erweitern und die wirtschaftliche Effizienz zu erhöhen.

Erfindungsgemäß wird diese Aufgabe durch ein Werkzeug mit den Merkmalen des Anspruchs 1 gelöst.

Während der Bearbeitung eines Werkstücks wirkt eine Kraft auf den Schneideinsatz, welche davon abhängt welches Material bearbeitet wird und welche Vorschubgeschwindigkeit gefahren wird. Diese Kraft muss durch den Werkzeughalter aufgenommen beziehungsweise abgeführt werden und wirkt insbesondere auf den unteren Klemmfinger ein. Neben der Kraft die auf den Schneideinsatz während der Bearbeitung eines Werkstücks einwirkt, übt auch der obere Klemmfinger eine Klemmkraft aus, welche über eine obere Klemmfläche am oberen Klemmfinger auf den Schneideinsatz wirkt. Diese Klemmkraft resultiert in einer entsprechenden Kraft, welche von dem Schneideinsatz auf den unteren Klemmfinger ausgeübt wird. Je nachdem, an welcher Stelle diese resultierende Kraft auf den unteren Klemmfinger wirkt, ergibt sich also eine zusätzliche Belastung am unteren Klemmfinger und insbesondere in dessen hervorspringendem Teil, der Unterstützung.

Um trotzdem eine kleine Dimensionierung des unteren Klemmfingers bzw. der Unterstützung zu ermöglichen, sieht die vorliegende Erfindung vor, dass zumindest ein Teil der oberen Klemmfläche in Längsrichtung betrachtet zwischen dem werkstückseitigen Ende und dem halterseitigen Ende des Grundkörpers angeordnet ist. Die Klemmkraft wirkt flächig vom oberen Klemmfinger aus in den Schneideinsatz ein und wird flächig vom Schneideinsatz in den unteren Klemmfinger abgeführt. Hierbei wird erfindungsgemäß zumindest ein Teil der auf den Schneideinsatz einwirkenden Klemmkraft nicht in den hervorspringenden Teil des unteren Klemmfingers, also in die Unterstützung, abgeführt, sondern vom Schneideinsatz direkt in den Grundkörper des Halters abgeleitet. Dies wird dadurch erreicht, dass die obere Klemmfläche nicht vollständig über dem vorspringenden Teil des unteren Klemmfingers, sondern zumindest teilweise innerhalb des Grundkörpers angeordnet ist. Die obere Klemmfläche ist demnach gegenüber dem unteren Klemmfinger, insbesondere gegenüber dessen hervorspringendem Teil, in Längsrichtung zurückversetzt. Die auf den Schneideinsatz ausgeübte Klemmkraft wird somit vom Schneideinsatz nur zum Teil auf den unteren Klemmfinger in seinem hervorspringenden Teil übertragen. Der Großteil der Klemmkraft wird dagegen direkt in den Grundkörper abgeleitet.

Des Weiteren wirkt nach der vorliegenden Erfindung ein resultierender Kraftvektor der Klemmkraft in einem Bereich ein, der sich in Längsrichtung betrachtet zwischen dem werkstückseitigen Ende und dem halterseitigen Ende des Grundkörpers befindet. Wenn die Klemmkraft aufintegriert und ein resultierender Kraftvektor ermittelt wird, so wirkt dieser erfindungsgemäß nicht im hervorspringenden Teil des unteren Klemmfingers sondern in dem Teil des unteren Klemmfingers, der sich innerhalb des Grundkörpers befindet und damit ohnehin eine höhere Stabilität aufweist. Der resultierende Kraftvektor bezeichnet einen gedachten Kraftvektor, welcher einer Summe der flächig einwirkenden Klemmkraft entspricht. Der resultierende Kraftvektor wirkt also direkt in den Grundkörper, wodurch eine geringere Belastung des vorspringenden Teils des unteren Klemmfingers erreicht wird. Hierbei ist es möglich, dass die obere Klemmkraft unterschiedliche Kraftprofile bezüglich einer oberen Anlagefläche am Schneideinsatz ausübt. Beispielsweise kann mehr als die Hälfte der oberen Klemmfläche über dem hervorspringenden Teil des unteren Klemmfingers liegen, jedoch die Kraft vor allem in einem Bereich einwirken, welcher nicht auf Höhe des hervorspringenden Teils liegt, sondern weiter hinten auf Höhe des Grundkörpers zu liegen kommt, sodass der resultierenden Kraftvektor trotzdem in einem Bereich innerhalb des Grundkörpers einwirkt.

Die erfindungsgemäße Ausgestaltung des Werkzeugs und insbesondere des Werkzeughalters bietet demnach den Vorteil, dass eine kleinere Dimensionierung des vorspringenden Teils des unteren Klemmfingers; also der Unterstützung, ermöglicht wird. Hierdurch werden beim axialen Einstechdrehen kleinere Radien und/oder größere Einstechtiefen ermöglicht, ohne dass es zu Stabilitätsproblemen kommt.

Weiterhin vorteilhaft ist, dass die erfindungsgemäße Auslegung des Werkzeughalters mit der oben beschriebenen oberen Klemmfläche und dem ebenfalls oben beschriebenen resultierenden Kraftvektor eine höhere Flexibilität bezüglich möglicher Anwendungen ergibt. So können beispielsweise dadurch, dass der untere Klemmfinger und/oder der Schneideinsatz im Vergleich zu früheren Werkzeugen weniger stabil ausgelegt sein müssen, weil die einwirkende Klemmkraft eher im Grundkörper als in der Unterstützung einwirkt, kleinere Unterstützungen realisiert werden. Solche kleineren Unterstützungen ermöglichen, dass das Werkzeug eine Bandbreite verschiedener Radien beim axialen Einstechdrehen abdecken kann. Hierdurch ergeben sich wiederum wirtschaftliche Vorteile.

In einer Ausgestaltung der Erfindung ist zumindest die Hälfe der oberen Klemmfläche in Längsrichtung betrachtet zwischen dem werkstückseitigen Ende und dem halterseitigen Ende des Grundkörpers angeordnet.

In dieser Ausgestaltung ist demnach definiert, dass nicht nur ein resultierender Kraftvektor der Klemmkraft in einem Bereich einwirkt, welcher sich zwischen dem werkstückseitigen Ende und dem halterseitigen Ende des Grundkörpers befindet, sondern dass sich weiterhin zumindest die Hälfe der oberen Klemmfläche nicht über dem hervorspringenden Teil des unteren Klemmfingers, sondern innerhalb des Grundkörpers, also oberhalb desjenigen Teils des unteren Klemmfingers befindet, der innerhalb des Grundkörpers angeordnet ist. Die Krafteinwirkung auf den unteren Klemmfinger wird dadurch weiter verringert, wodurch der erfindungsgemäße Effekt weiter verstärkt wird.

Eine weitere Ausgestaltung des erfindungsgemäßen Werkzeugs sieht vor, dass die gesamte obere Klemmfläche in Längsrichtung betrachtet zwischen dem werkstückseitigen Ende und dem halterseitigen Ende des Grundkörpers angeordnet ist.

In dieser Ausgestaltung ist also die gesamte obere Klemmfläche auf Höhe bzw. innerhalb des Grundkörpers angeordnet. Das vorderste Ende des oberen Klemmfingers ist dann vom werkstückseitigen Ende des Grundkörpers des Halters in Längsrichtung zurückversetzt. Entsprechend wirkt auch der resultierende Kraftvektor der Klemmkraft auf einen Bereich ein, welcher gegenüber dem werkstückseitigen Ende des Grundkörpers nach hinten in Richtung des halterseitigen Endes versetzt ist. Der untere Klemmfinger bzw. die Unterstützung wird dadurch noch weniger belastet.

In einer weiteren Ausgestaltung erstreckt sich der Schneideinsatz im Wesentlichen entlang einer Längsachse von einem halterseitigen Ende des Schneideinsatzes zu einem werkstückseitigen Ende des Schneideinsatzes. Zudem weist der Schneideinsatz einen werkstückseitigen Bereich und einen halterseitigen Bereich auf. Im werkstückseitigen bzw. vorderen Bereich des Schneideinsatzes ist eine Schneidfläche mit zumindest einer Schneidkante angeordnet. Im halterseitigen bzw. hinteren Bereich weist der Schneideinsatz eine an einer Oberseite des Schneideinsatzes angeordnete obere Anlagefläche zur Anlage an der oberen Klemmfläche des oberen Klemmfingers sowie eine an einer der oberen Anlagefläche gegenüberliegenden Unterseite des Schneideinsatzes angeordnete untere Anlagefläche zur Anlage an einer unteren Klemmfläche des unteren Klemmfingers auf.

Bevorzugt wird ein Schneideinsatz verwendet, welcher im Wesentlichen quaderförmig ist und eine größere Ausdehnung in Längsrichtung als in Quer- oder Vertikalrichtung aufweist. Die Längsachse des Schneideinsatzes ist üblicherweise mit der Längsachse bzw. der Längsrichtung des Grundkörpers des Werkzeughalters gleichgerichtet und entspricht der Vorschubrichtung des Werkzeuges. Die Vertikalrichtung im Schneideinsatz, beziehungsweise eine Vertikalachse des Schneideinsatzes bezeichnet eine Achse, die in einem eingespanntem Zustand, in dem der Schneideinsatz im Werkzeughalter festgelegt ist, im Wesentlichen parallel zu der vom oberen Klemmfinger auf den Schneideinsatz in Richtung des unteren Klemmfingers ausgeübten Klemmkraft entspricht. Diese Vertikalrichtung entspricht üblicherweise ebenfalls der Schnittrichtung, also der Richtung, in der der Spanabhub erfolgt.

Weiterhin ist es bevorzugt, dass sich die untere Anlagefläche entlang der Längsachse im Wesentlichen über die gesamte Unterseite des Schneideinsatzes im werkstückseitigen Bereich und im halterseitigen Bereich erstreckt, wobei sich die obere Anlagefläche entlang der Längsachse lediglich über einen Teil der Oberseite des Schneideinsatzes im halterseitigen Bereich erstreckt.

Die untere Anlagefläche hat in Längsrichtung also vorzugsweise eine größere Ausdehnung als die obere Anlagefläche. Die untere Anlagefläche erstreckt sich in Längsrichtung betrachtet bevorzugt über die gesamte Länge des Schneideinsatzes und liegt am unteren Klemmfinger sowohl an dessen hervorspringendem Teil als auch an dessen Teil innerhalb des Grundkörpers an. Der gesamte Schneideinsatz besteht vorzugsweise aus Hartmetall. Der Schneideinsatz ist erfindungsgemäß als sogenannter Einschneider ausgebildet, bei welchem nur eine Schneidfläche vorgesehen ist.

In einer weiteren Ausgestaltung ist es ferner vorgesehen, dass im halterseitigen Bereich des Schneideinsatzes ein Abstand zwischen der oberen Anlagefläche und der unteren Anlagefläche entlang der Längsachse in Richtung zum halterseitigen Ende des Schneideinsatzes zunimmt.

Der Schneideinsatz weitet sich also mit anderen Worten nach hinten hin auf. Dadurch dass sich der Schneideinsatz seines halterseitigen Endes aufweitet, wird eine (mechanische) Rückzugssicherung des Schneideinsatzes erreicht. Der obere Klemmfinger wirkt demnach beispielsweise auf eine in Längsrichtung ansteigende Fläche ein, während der untere Klemmfinger auf eine Fläche einwirkt, welche im Wesentlichen parallel zur Längsachse des Schneideinsatzes ausgerichtet ist. Dies hat zur Folge, dass der Schneideinsatz nicht nur aufgrund von Reibungskräften zu den anliegenden Klemmfingern in Längsrichtung unbeweglich ist, sondern dass darüber hinaus auch die keilförmige Gestaltung einer Längsbewegung in Richtung des werkstückseitigen Endes des Schneideinsatzes beziehungsweise des Werkzeughalters entgegenwirkt.

In einer weiteren Ausgestaltung ist es vorgesehen, dass der Schneideinsatz im werkstückseitigen Bereich auf seiner der unteren Anlagefläche gegenüberliegenden Oberseite ein im Wesentlichen als schräge Fläche ausgebildetes Spanleitelement aufweist, welches mit der Längsachse des Schneideinsatzes einen sich in Richtung des halterseitigen Endes des Schneideinsatzes öffnenden Winkel von 5° bis 15° ausbildet.

Demzufolge ist das Spanleitelement so ausgebildet, dass es durch einen flachen Anstieg einen guten Spanabfluss ermöglicht. Als besonders vorteilhaft hat sich ein Winkel im Bereich von 12° herausgestellt. Dieser Winkel bezeichnet dabei eine Aufweitung des Schneideinsatzes in Vertikalrichtung in Richtung des halterseitigen Endes des Schneideinsatzes. Der Schneideinsatz wird also auch im Bereich des Spanleitelements von der Schneidfläche, also von seinem werkstückseitigen Ende aus gesehen, in Richtung seines halterseitigen Endes in Vertikalrichtung betrachtet dicker.

In einer weiteren vorteilhaften Ausgestaltung ist es vorgesehen, dass, in einer Seitenansicht entlang der Längsachse des Schneideinsatzes betrachtet, eine maximale Höhe des Spanleitelements über der unteren Anlagefläche größer ist als eine minimale Höhe einer der oberen Klemmfläche abgewandten Oberseite des oberen Klemmfingers über der unteren Klemmfläche des unteren Klemmfingers.

Unter "maximaler Höhe" des Spanleitelements über der unteren Anlagefläche wird ein maximaler Abstand zwischen dem Spanleitelement und der unteren Anlagefläche verstanden, also der Abstand zwischen der unteren Anlagefläche und einem Punkt auf dem Spanleitelement, welcher von der unteren Anlagefläche den größten Abstand besitzt. Die maximale Höhe des Spanleitelements entspricht somit einer maximalen Ausdehnung des Schneideinsatzes in Vertikalrichtung. Unter "minimaler Höhe" der Oberseite des oberen Klemmfingers über der unteren Klemmfläche wird der Abstand in geklemmtem Zustand zwischen der unteren Klemmfläche und einem dieser nächstgelegenen Punkt auf der Oberseite des oberen Klemmfingers verstanden.

Das Spanleitelement hat also in einer Seitenansicht entlang der Längsachse des Schneideinsatzes betrachtet eine Art Sägezahn-Profil. Üblicherweise liegt der obere Klemmfinger direkt hinter (vom Werkstück weg in Richtung des halterseitigen Endes des Schneideinsatzes) dem Spanleitelement an. Die obere Anlagefläche befindet sich in dieser Terminologie bleibend also hinter dem Spanleitelement. An dieser oberen Anlagefläche liegt der obere Klemmfinger an. Dadurch dass die maximale Höhe des Spanleitelements größer ist als die minimale Höhe des oberen Klemmfingers, kann der Span ungehindert abfließen.

Der obere Klemmfinger ist üblicherweise in einem Längsprofil entlang der Längsachse des Grundkörpers des Werkzeughalters ebenfalls keilförmig ausgebildet. Jedoch ist es zur Ausübung der Klemmkraft üblicherweise erforderlich, dass der obere Klemmfinger auch an seiner vordersten Stelle eine ausreichende Ausdehnung in Vertikalrichtung aufweist. Um zu verhindern, dass dieses vordere Ende des oberen Klemmfingers aus Werkstückrichtung betrachtet den Spanabfluss hemmt oder behindert, ist die oben beschriebene Ausbildung des Schneideinsatzes vorgesehen.

Gemäß einer weiteren Ausgestaltung weist der Grundkörper in einem Bereich zwischen dem oberen Klemmfinger und dem unteren Klemmfinger eine Anschlagfläche für das halterseitige Ende des Schneideinsatzes auf. Ein Abstand zwischen der Anschlagfläche und einem dem Werkstück zugewandten Ende des oberen Klemmfingers in Längsrichtung des Grundkörpers ist dabei vorzugsweise kleiner ist als ein Abstand zwischen einem halterseitigen Ende des Spanleitelements und dem halterseitigen Ende des Schneideinsatzes entlang der Längsachse des Schneideinsatzes.

Die Anschlagfläche verhindert eine Verschiebung des Schneideinsatzes gegenüber dem Werkzeughalter in Längsrichtung. Wenn das Werkzeug in Richtung des Werkstücks (in Vorschubrichtung) bewegt wird, erfolgt ein Krafteintrag in Richtung der Längsachse des Schneideinsatzes beziehungsweise des Werkzeughalters. Diesem Krafteintrag wirkt die Anlagefläche entgegen. Die Anschlagfläche ist vorzugsweise am unteren Klemmfinger angeordnet und quer zur Längsrichtung ausgerichtet. Durch die oben genannten Abstandsverhältnisse wird erreicht, dass der Schneideinsatz an der Anschlagfläche anliegt und dass das Spanleitelement, insbesondere an seiner dem Werkstück abgewandten Seite, den oberen Klemmfinger nicht kontaktiert. In einer Seitenansicht entlang der Längsachse des Schneideinsatzes und des Werkzeughalters besteht also ein Abstand zwischen dem Keil beziehungsweise dem Sägezahn, welcher durch das Spanleitelement gebildet wird, und dem oberen Klemmfinger. Hierdurch wird erreicht, dass die in Längsrichtung wirkenden Kräfte direkt in den Grundkörper eingeleitet werden und nicht am oberen Klemmfinger ansetzen.

Gemäß einer weiteren Ausgestaltung weist der Schneideinsatz quer zur Längsachse betrachtet im Bereich der oberen Anlagefläche einen prismatischen Querschnitt auf, wobei die obere Anlagefläche aus zwei in einem Winkel zueinander stehenden oberen Schenkelflächen zur Anlage am dem oberen Klemmfinger gebildet wird. Dementsprechend weist der Schneideinsatz quer zur Längsachse betrachtet auch im Bereich der unteren Anlagefläche einen prismatischen Querschnitt auf, wobei die untere Anlagefläche ebenfalls aus zwei in einem Winkel zueinander stehenden unteren Schenkelflächen zur Anlage an dem unteren Klemmfinger gebildet wird.

Ein prismatischer Querschnitt bezeichnet hier einen Querschnitt in Form eines Polygons (Vieleck). Dieser prismatische Querschnitt weist insbesondere an seiner der oberen Anlagefläche zugewandten Seite zwei in einem Winkel zueinander stehende Schenkel auf, welche den Schenkelflächen an der oberen Anlagefläche entsprechen. Sowohl die obere als auch die unter Anlagefläche bestehen demzufolge jeweils zumindest aus zwei (Teil-) Flächen. Diese beiden Schenkelflächen schließen jeweils zueinander einen Winkel ein. Bevorzugt entspricht der Querschnitt im Bereich der oberen und der unteren Anlagefläche jeweils der Form eines gleichschenkligen Trapezes. Üblicherweise weisen der oberen und der untere Klemmfinger des Werkzeughalters entsprechende Querschnitte auf.

Es sei hierbei noch angemerkt, dass es sowohl möglich ist, dass der Schneideinsatz nur im Bereich der unteren oder nur im Bereich der oberen Anlagefläche einen prismatischen Querschnitt aufweist. Bevorzugt ist jedoch in beiden Bereichen ein prismatischer Querschnitt vorgesehen, so dass der Querschnitt des Schneideinsatzes im hinteren Bereich (werkstückseitigen Bereich) doppel-prismatisch ausgebildet ist.

In einem Querschnitt quer zur Längsachse des Schneideinsatzes sind die oberen Schenkelflächen vorzugsweise gegenüber den unteren Schenkelflächen quer zur Längsachse versetzt.

Es hat sich herausgestellt, dass eine hohe Stabilität dadurch ermöglicht wird, dass eine Trapezfläche, welche von den oberen Schenkelflächen gebildet wird, und eine Trapezfläche, welche von den unteren Schenkelflächen gebildet wird, zueinander in Querrichtung versetzt sind. Solch ein Versatz bewirkt eine Scherkraft. Hierdurch kann ein besonders fester Sitz des Schneideinsatzes im Werkzeughalter erreicht werden.

In einer weiteren Ausführung weist der sichelförmige Querschnitt einen Außenradius und einen Innenradius auf, wobei der Innenradius größer als der Außenradius ist und ein Mittelpunkt eines dem Innenradius zugeordneten Kreises nicht auf einem Mittelpunkt eines dem Außenradius zugeordneten Kreises liegt.

Wie ebenfalls bereits ausgeführt, kann hierdurch erreicht werden, dass Ringnuten in einem Radienbereich gestochen werden können, welcher im Wesentlichen durch den Radius des Innenradius und den Radius des Außenradius des Querschnitts der Unterstützung bestimmt ist. Der Innenradius bezeichnet hierbei den Radius, den die Unterstützung im Querschnitt betrachtet auf der Seite bildet, welche der zentralen Längsachse (Drehachse) des Werkstücks zugewandt ist. Entsprechend bezeichnet der Außenradius den Radius der Unterstützung auf ihrer der zentralen Längsachse des Werkstücks abgewandten Seite.

In einer bevorzugten Ausgestaltung ist es bevorzugt vorgesehen, dass das Betätigungselement als Spannschraube ausgebildet ist, welche durch eine Aussparung im oberen Klemmfinger in ein Gewinde im Grundkörper eingreift.

Durch diese Spannschraube wird es ermöglicht, dass der obere Klemmfinger in Richtung des unteren Klemmfingers gezogen wird. Dies bietet den Vorteil einer einfachen und lösbaren Klemmeinrichtung, welche ein Festlegen des Schneideinsatzes zwischen dem oberen und unteren Klemmfinger erlaubt. Die Spannschraube kann schnell und einfach gelöst werden, so dass der Schneideinsatz, insbesondere bei Verschleiß, ersetzt werden kann.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine perspektivische Darstellung eines Werkzeugs zur spanenden Bearbeitung gemäß einer Ausführungsform der vorliegenden Erfindung;
- Fig. 2: eine Vorderansicht einer Ausführung des erfindungsgemäßen Werkzeugs;
- Fig. 3: eine schematische Darstellung der durch den oberen Klemmfinger ausgeübten Klemmkraft in einer Profilsicht entlang einer Längsachse des Werkzeugs;
- Fig. 4: eine Darstellung einer zweiten Ausführungsform des erfindungsgemäßen Werkzeugs in Profilansicht in Längsrichtung;
- Fig. 5: eine Darstellung einer dritten Ausführungsform des erfindungsgemäßen Werkzeugs in Profilansicht in Längsrichtung;
- Fig. 6: eine perspektivische Darstellung eines Schneideinsatzes zur Verwendung in dem erfindungsgemäßen Werkzeug,
- Fig. 7: eine Darstellung des festgelegten Schneideinsatzes in dem erfindungsgemäßen Werkzeug in Profilansicht in Längsrichtung,
- Fig. 8: eine Darstellung des Schneideinsatzes in Profilsicht sowie in zwei Frontalansichten, und
- Fig. 9: eine Querschnittsansicht quer zur Längsrichtung des erfindungsgemäßen Werkzeugs.

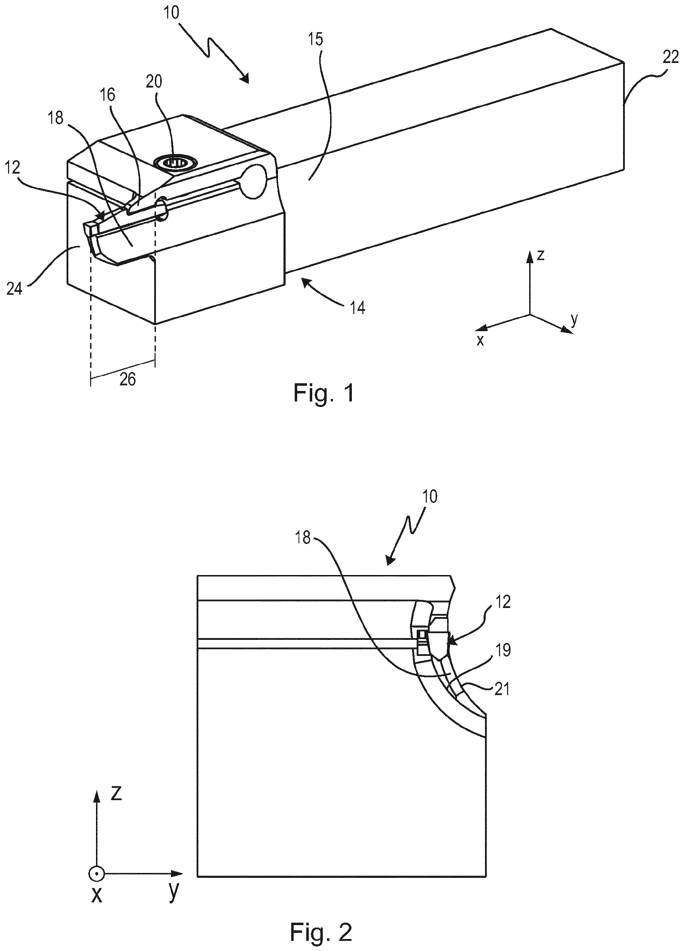

Fig. 1 zeigt ein erstes Ausführungsbeispiel 10 eines Werkzeugs zur spanenden Bearbeitung eines Werkstücks. Das Werkzeug 10 weist einen Schneideinsatz 12, welcher auswechselbar in einem Werkzeug- bzw. Klemmhalter 14 festlegbar ist. Der Werkzeughalter 14 weist einen Grundkörper 15 sowie einen oberen Klemmfinger 16 und einem unteren Klemmfinger 18 auf. Der untere Klemmfinger 18 weist einen über den Grundkörper 15 hervorspringenden Teil auf, welcher als Unterstützung bezeichnet wird.

Der Schneideinsatz 12 wird zwischen dem oberen Klemmfinger 16 und dem unteren Klemmfinger 18 aufgenommen. Das Werkzeug 10 weist weiterhin ein Betätigungselement 20 auf, durch welches der Schneideinsatz 12 im Werkzeughalter 14 festgelegt beziehungsweise festgeklemmt werden kann. Im vorliegenden Ausführungsbeispiel ist das Betätigungselement 20 als Spannschraube ausgebildet, welche durch eine Aussparung im oberen Klemmfinger 16 in ein Gewinde im Grundkörper 15 eingreift. Es versteht sich jedoch, dass der obere Klemmfinger 18 auch selbstklemmend ausgestaltet sein kann, so dass kein separates Betätigungselement 20 notwendig ist. Der obere Klemmfinger 18 ließe sich in diesem Fall dann beispielsweise mit Hilfe eines Werkzeugschlüssels aufspreizen, um den Schneideinsatz 12 bei Verschleiß auszutauschen.

Der Grundkörper 15 beziehungsweise das gesamte Werkzeug 10 erstrecken sich im Wesentlichen entlang einer Längsrichtung x. Im eingespannten Zustand ist die Längsrichtung bzw. -achse x' des Schneideinsatzes 12 vorzugsweise parallel zur Längsrichtung x des Grundkörpers 15 ausgerichtet. Der Grundkörper 15 weist ein halterseitiges Ende 22 sowie ein werkstückseitiges Ende 24 auf, wobei das werkstückseitige Ende 24 während der Bearbeitung dem Werkstück zugewandt ist und das halterseitige Ende 22 einer entsprechenden Haltevorrichtung zur Aufnahme des Werkzeughalters 14 in einer Werkzeugmaschine zugewandt ist.

Das in Fig. 1 gezeigte Werkzeug 10 ist zum Einstechdrehen, insbesondere zum axialen Einstechdrehen, ausgebildet. Hierbei wird das Werkzeug 10 in Längsrichtung x auf das Werkstück zu bewegt, und es erfolgt eine Spanabhebung am Schneideinsatz 12. Beim Einstechdrehen ist die Vorschubrichtung vorzugsweise parallel zur Längsachse des Werkstücks ausgerichtet.

Ein Teil des unteren Klemmfingers 18, nämlich die sogenannte Unterstützung, springt über das werkstückseitige Ende 24 des Grundkörpers 15. Die Länge 26 der Unterstützung entspricht dabei maximal der Länge des in eingespanntem Zustand über den Grundkörper 15 hervorspringenden Teils des Schneideinsatzes 12, welcher die maximale Einstechtiefe des Werkzeugs 10 bestimmt.

Fig. 2 zeigt eine Frontalansicht des Werkzeugs 10 aus Richtung des Werkstücks betrachtet. Der untere Klemmfinger 18 ist insbesondere in seinem über den Grundkörper 15 hervorspringenden Teil sichelförmig ausgebildet. Hierdurch lassen sich beim axialen Einstechdrehen Ringnuten erzeugen. Die minimale Breite einer Ringnut ist dabei durch die Breite des Schneideinsatzes 12 vorgegeben. Durch eine Bewegung des Werkzeugs 10 quer zur Einstechrichtung kann die Ringnut verbreitert werden. In der vorliegenden Figur erfolgt das Einstechen demnach in x-Richtung parallel zur Drehachse des Werkstücks, und die Verbreiterung der Ringnut erfolgt durch eine Bewegung des Werkzeugs 10 in y-Richtung. Der Radius einer einzustechenden Ringnut ist hierbei sowohl nach unten als auch nach oben hin durch den Radius der Unterstützung begrenzt.

Wie aus Fig. 2 ferner ersichtlich ist, weist der Querschnitt der Unterstützung einen Außenradius 19 und einen davon abweichenden Innenradius 21 auf. Vorteilhafterweise ist der Innenradius 21 größer als der Außenradius 19. Die von dem Werkzeug 10 erzeugten Ringnuten sind in ihrem Radienbereich nach unten hin durch den Außenradius 19 und nach oben hin durch den Innenradius 21 der Unterstützung beschränkt. Um eine Kollision des Werkzeugs mit Unterstützung des unteren Klemmfingers 18 zu vermeiden, kann demzufolge kein größerer Radius als der Innenradius 21 und kein kleinerer Radius als der Außenradius 19 der Unterstützung eingestochen werden.

Auf der anderen Seite bildet der hervorspringende Teil des unteren Klemmfingers 18 eine Kraftunterstützung für den Schneideinsatz 12. Je schmaler die Unterstützung dimensioniert ist, desto instabiler wird das Gesamtsystem und desto größer die Gefahr einer Zerstörung des Werkzeugs 10.Auch die Länge der Unterstützung in x-Richtung, welche für größere Einstechtiefen wichtig ist, ist begrenzt, da ein zu lange Unterstützung (d.h. ein in x-Richtung zu weit über das werkstückseitige Ende 24 des Grundkörpers 15 hervorspringender unterer Klemmfinger 18) ebenfalls zu Instabilität führen würde.

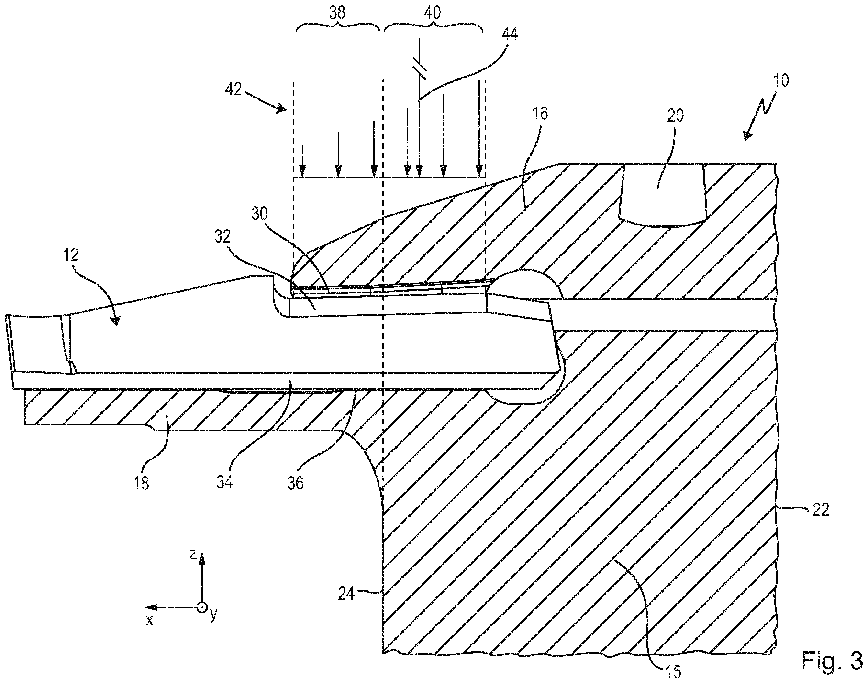

Fig. 3 zeigt eine Ansicht eines erfindungsgemäßen Werkzeugs 10 im Profil entlang der Längsachse x des Grundkörpers 15. Der obere Klemmfinger 16 übt über eine an diesem angeordnete obere Klemmfläche 30 eine Klemmkraft auf den Schneideinsatz 12 aus. Diese Klemmkraft wird über eine obere Anlagefläche 32 an dem Schneideinsatz 12 in diesen eingeleitet und wirkt dann über eine untere Anlagefläche 34 am Schneideinsatz 12 auf eine untere Klemmfläche 36 am unteren Klemmfinger 18 ein. Die Kraft wird dabei üblicherweise flächig am unteren Klemmfinger 18, sowohl in dessen hervorspringendem Teil als auch in dessen innerhalb des Grundkörpers 15 liegendem Teil in den Grundkörper eingeleitet.

Beim Spannen bzw. Festlegen des Schneideinsatzes 12 mittels der Spannschraube 20 berührt zunächst ein vorderer beziehungsweise werkstückseitiger Bereich 38 des oberen Klemmfingers 16 den Schneideinsatz 12. Beim weiteren Spannen wird dieser vordere Bereich des 38 des oberen Klemmfingers 16 elastisch verformt, bis auch der hintere bzw. halterseitige Bereich 40 des oberen Klemmfingers 16 mit dem Schneideinsatz 12 in Kontakt kommt. Der vordere Bereich 38 des oberen Klemmfingers ist demnach so gestaltet, dass er sich verbiegt. Damit kann erreicht werden, dass die Krafteinwirkung im vorderen Bereich 38 des oberen Klemmfingers 16 nur relativ gering ausgeprägt ist, womit ein Verbiegen des hervorspringenden Teils des unteren Klemmfingers 18 verhindert wird. Hierdurch ergibt sich das in Fig. 3 schematisch gezeigte Kraftprofil 42 an der Kontaktfläche zwischen dem oberen Klemmfinger 16 und der Oberseite des Schneideinsatzes 12.

Erfindungsgemäß ist vorgesehen, dass zumindest ein Teil der oberen Klemmfläche 30 des oberen Klemmfingers 16, in Längsrichtung x betrachtet, zwischen dem werkstückseitigen Ende 24 und dem halterseitigen Ende 22 des Grundkörpers 15 liegt. Ein Teil der oberen Klemmfläche 30 ist also nicht über dem hervorspringenden Teil des unteren Klemmfingers 18 (der Unterstützung) angeordnet, sondern innerhalb des Grundkörpers 15 bzw. hinter dem werkstückseitigen Ende 24 des Grundkörpers 15.

Selbstverständlich können sich aus anderen Dimensionierungen sowie aus anderen Geometrien des erfindungsgemäßen Werkzeugs 10 auch andere Kraftprofile ergeben, wie das in Fig. 3 schematisch dargestellte Kraftprofil 42. Das in Fig. 3 dargestellte Kraftprofil 42 ist lediglich als Beispiel zu verstehen. Erfindungsgemäß ist es jedoch wichtig, dass ein resultierender Kraftvektor 44, welcher sich aus der Summe bzw. Integration der flächig einwirkenden Klemmkraft ergibt, in einem Bereich auf den Schneideinsatz 12 einwirkt, welcher sich in Längsrichtung x betrachtet zwischen dem werkstückseitigen Ende 24 und dem halterseitigen Ende 22 des Grundkörpers 15 erstreckt. Insbesondere wirkt der resultierende Kraftvektor 44 demnach innerhalb des Grundkörpers 15 und nicht direkt auf den hervorspringenden Teil des unteren Klemmfingers 18, also auf die Unterstützung ein. Dies hat den Vorteil, dass die Kraft auf die Unterstützung möglichst geringgehalten wird. Hierdurch kann die Dimensionierung der Unterstützung minimal gewählt werden.

Des Weiteren bringt die elastische Verformung des oberen Klemmfingers 16 in seinem ersten Bereich 38 während des Spanvorgangs Vorteile. Wenn beispielsweise beim Spanvorgang eine Schnittkraft (normalerweise entgegen der dargestellten z-Richtung) auf den Schneideinsatz 12 einwirkt, wird dieser zusammen mit dem hervorspringenden Teil des unteren Klemmfingers 18 nach unten (in z-Richtung) "gebogen". Folglich wird der Schneideinsatz 12 auch unter Last (also auch während des Spanvorgangs) bis zum vordersten Punkt (auf der Seite des Werkstücks) des oberen Klemmfingers 16 geführt.

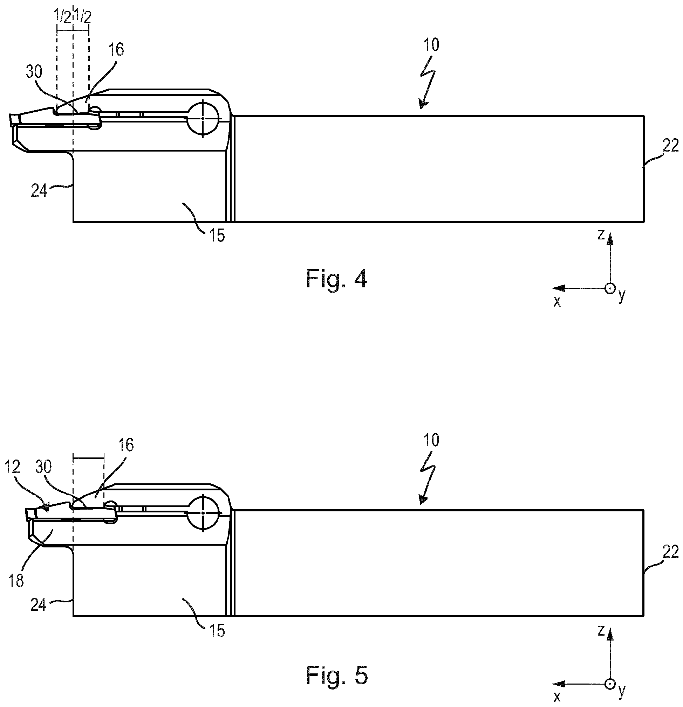

Fig. 4 zeigt eine Profilansicht einer zweiten Ausführungsform des erfindungsgemäßen Werkzeugs 10. In dieser Ausführungsform befindet sich nicht nur ein Teil der oberen Klemmfläche 30 in Längsrichtung x betrachtet zwischen dem werkstückseitigen Ende 24 und dem halterseitigen Ende 22 des Grundkörpers 15, sondern zumindest die Hälfte davon. Der resultierende Kraftvektor der Klemmkraft liegt ebenfalls (immer noch) innerhalb des Grundkörpers 15, also zwischen dessen werkstückseitigem Ende 24 und dessen halterseitigem Ende 22.

Fig. 5 zeigt eine dritte Ausführungsform des erfindungsgemäßen Werkzeugs 10. Hierbei befindet sich die gesamte obere Klemmfläche 30 des oberen Klemmfingers 16 innerhalb des Grundkörpers 15, also zwischen dessen werkstückseitigem Ende 24 und dessen halterseitigem Ende 22. Hierdurch ist sichergestellt, dass der resultierende Kraftvektor 44 in jedem Fall (unabhängig von dem Kraftprofil) innerhalb des Grundkörpers 15 wirkt. Demnach ist die Krafteinwirkung, welche sich aufgrund der vom oberen Klemmfinger 16 ausgeübten Klemmkraft durch den Schneideinsatz 12 auf den hervorspringenden Teil des unteren Klemmfingers 18 ergibt, noch weiter reduziert. Folglich kann eine relativ kleine Dimensionierung der Unterstützung gewählt werden, weil nun die gesamte Klemmkraft direkt in den Grundkörper 15 des Werkzeughalters 14 eingeleitet wird.

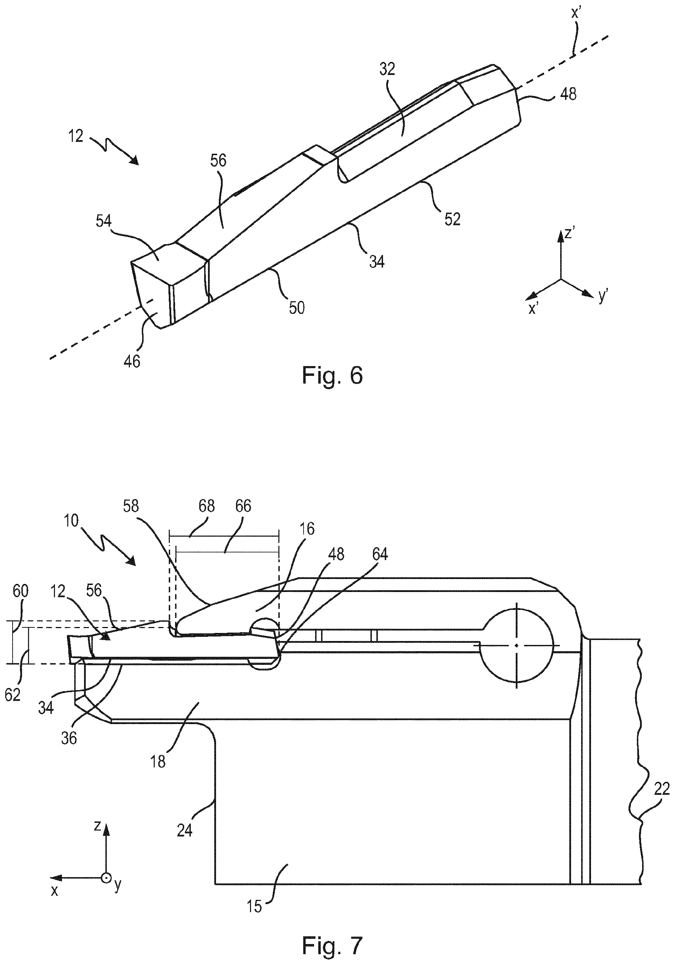

Fig. 6 zeigt eine perspektivische Darstellung eines Schneideinsatzes 12. Der Schneideinsatz 12 erstreckt sich im Wesentlichen entlang einer Längsachse x' ebenfalls von einem werkstückseitigen Ende 46 zu einem halterseitigen Ende 48. Der Schneideinsatz 12 weist im Wesentlichen einen werkstückseitigen Bereich 50 sowie einen halterseitigen Bereich 52 auf. Im werkstückseitigen Bereich 50 befindet sich eine Schneidfläche 54, an welcher der eigentliche Spanabhub erfolgt. Der gesamte Schneideinsatz 12 wird bevorzugt aus Hartmetall gefertigt. Im Gegensatz dazu wird der Werkzeughalter 14 üblicherweise nicht aus Hartmetall, sondern aus vorzugsweise aus Stahl gefertigt.

In seinem halterseitigen Bereich 52 weist der Schneideinsatz 12 eine obere Anlagefläche 32 zur Anlage an dem oberen Klemmfinger 16 auf. Dieser oberen Anlagefläche 32 gegenüberliegend befindet sich eine untere Anlagefläche 34, welche sich im vorliegenden Ausführungsbeispiel über die gesamt Unterseite des Schneideinsatzes 12 erstreckt und am unteren Klemmfinger 18 sowohl in seinem hervorspringenden Teil als auch in seinem Teil innerhalb des Grundkörpers 15 anliegt. Die Klemmkraft wirkt über die obere Anlagefläche 32 durch den Schneideinsatz 12 auf die untere Anlagefläche 34 und damit auf den unteren Klemmfinger 16 ein.

Der Schneideinsatz 12 weist vorteilhafterweise in seinem werkstückseitigen Bereich 50 ein Spanleitelement 56 auf. Dieses Spanleitelement 56 ist im Wesentlichen als schräge Fläche ausgebildet und schließt mit der Längsachse x' des Schneideinsatzes 12 vorzugsweise einen Winkel von 5° bis 15° ein. Über dieses Spanleitelement 56 werden die an der Schneidfläche abgespanten Späne abgeleitet. Insbesondere hat sich hierbei ein Winkel von 12° als besonders vorteilhaft erwiesen. Ein flaches Spanleitelement 56 erlaubt einen ungehinderten Spanabfluss, bei welchem der Span nicht zu schnell bricht, jedoch auch nicht aufgerollt wird. Ein gleichmäßiger Spanabfluss ist insbesondere beim Stechen von Ringnuten durch das axiale Einstechdrehen notwendig, um ein Blockieren des Werkzeugs durch Span, welcher sich in der Ringnut ansammelt, zu verhindern.

Fig. 7 zeigt eine Ausführungsform des Werkzeugs 10 gemäß der vorliegenden Erfindung in Profilsicht. Es hat sich als weiterhin vorteilhaft herausgestellt, dass das Spanleitelement 56 am Schneideinsatz 12 durch die Vorderseite 58 des oberen Klemmfingers 16 fortgesetzt wird. Hierdurch wird der Spanabfluss weiter unterstützt. Der Span läuft also zunächst über das Spanleitelement 58 und dann über die Vorderseite 58 des oberen Klemmfingers 16. Um einen ungehinderten Spanabfluss zu ermöglichen, ist es üblicherweise erforderlich, dass die maximale Höhe 60 des Spanleitelements 56 über der unteren Klemmfläche 36 des Schneideinsatzes 12 größer ist als eine minimale Höhe 62 der der oberen Klemmfläche 30 abgewandten Oberseite des oberen Klemmfingers 16 über der unteren Klemmfläche 34 in gespanntem Zustand. Insbesondere ist an dieser Ausgestaltung vorteilhaft, dass der Span, welcher über das Spanleitelement 56 abfließt, sich nicht am oberen Klemmfinger 16 verfängt. Die Vorderkante 58 des oberen Klemmfingers 16 läuft demnach in Richtung des Werkstücks an einem Punkt aus, welcher unter dem obersten Punkt des Spanleitelements 56 liegt.

Des Weiteren weist der Grundkörper 15 in einem Bereich zwischen dem oberen Klemmfinger 16 und dem unteren Klemmfinger 18 eine Anschlagfläche 64 auf, an welcher das halterseitige Ende 48 des Schneideinsatzes 12 in geklemmtem Zustand anliegt. Diese Anschlagfläche 64 bedingt, dass sich der Schneideinsatz 12 nicht gegenüber dem Grundkörper 15 in x-Richtung verschieben lässt. Wenn demnach das Werkzeug 10 in Vorschubrichtung x in das Werkstück einsticht, wirkt eine Kraft durch den Schneideinsatz 12 auf die Anschlagfläche 64. In der vorliegenden Ausführungsform des Werkzeugs 10 ist die Anlagefläche 64 im Bereich des unteren Klemmfingers 18 vorgesehen, beziehungsweise als Vorsprung am unteren Klemmfinger 18 ausgeprägt. Es ist in anderen Ausführungsformen jedoch ebenfalls möglich, dass sich die Anschlagfläche 64 am oberen Klemmfinger 16 befindet.

Des Weiteren ist es gemäß der vorliegenden Erfindung vorgesehen, dass ein Abstand 66 in Längsrichtung x des Grundkörpers 15 zwischen der Anschlagfläche 64 und einem dem Werkstück zugewandten Ende des oberen Klemmfingers 16 kleiner ist als ein Abstand 68 zwischen dem halterseitigen Ende des Spanleitelements 56 und dem halterseitigen Ende 48 des Schneideinsatzes 12 entlang der Längsachse x' des Schneideinsatzes 12. Demnach liegt der Schneideinsatz 12 in geklemmtem Zustand quer zur Längsrichtung x nur an seinem halterseitigen Ende 48 am Grundkörper 15 an. Am Ende des Spanleitelements 56 findet sich kein Anschlagpunkt bzw. kein Kontakt zum oberen Klemmfinger 18.

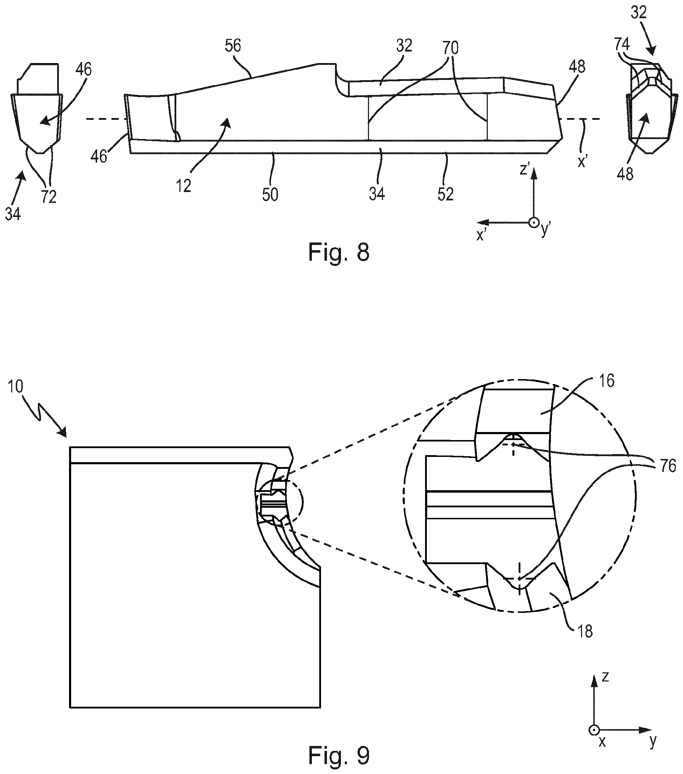

Fig. 8 zeigt in der Mitte eine Profilansicht des Schneideinsatzes 12 entlang seiner Längsrichtung x. In einer bevorzugten Ausgestaltungsform der vorliegenden Erfindung weitet sich der Schneideinsatz 12 in seinem halterseitigen Bereich 52 in Vertikalrichtung z in Richtung zu seinem halterseitigen Ende 48 hin auf. Demnach nimmt der Abstand 70 zwischen der oberen Anlagefläche 32 und der unteren Anlagefläche 34 vom werkstückseitigen Ende 46 in Richtung des halterseitigen Endes 48 des Schneideinsatzes 12 zu. Durch diese Aufweitung im halterseitigen Bereich 52 des Schneideinsatzes 12 wird eine Rückzugsicherung erreicht.

Auf der linken Seite zeigt Fig. 8 eine Frontalansicht des Schneideinsatzes 12 aus Richtung des Werkstücks (entgegen der x-Richtung) betrachtet. Insbesondere zeigt die auf der linken Seite in Fig. 8 dargestellte Frontalansicht den Querschnitt des Schneideinsatzes 12 in seinem werkstückseitigen Bereich 50 beziehungsweise dessen werkstückseitiges Ende 46. Der Schneideinsatz 12 weist auf seiner unteren Seite (untere Anlagefläche 34) einen prismatischen Querschnitt auf. Diese Unterseite, also die untere Anlagefläche 34, ist nicht einteilig ausgebildet, sondern besteht aus zwei in einem Winkel zueinander stehenden unteren Schenkelflächen 72. Diese unteren Schenkelflächen 72 liegen in einer vorteilhaften Ausbildung der vorliegenden Erfindung an eine entsprechend geformte untere Klemmfläche am unteren Klemmfinger 18 an. Dies bewirkt insbesondere, dass eine Querverschiebung des Schneideinsatzes 12 in y-Richtung verhindert bzw. erschwert wird. Hierdurch kann ein stabilerer Sitz des Schneideinsatzes 12 im Werkzeughalter 14 erreicht werden.

Auf der rechten Seite ist in Fig. 8 eine entsprechende Frontalansicht des Schneideinsatzes 12 aus Richtung des Werkzeughalters 14 dargestellt. Die Abbildung zeigt demnach das halterseitige Ende 48 des Schneideinsatzes 12. Insbesondere dargestellt ist der Querschnitt im halterseitigen Bereich 52 des Schneideinsatzes 12. In diesem halterseitigen Bereich 52 weist der Schneideinsatz 12 im Bereich der oberen Anlagefläche 32 ebenfalls einen prismatischen Querschnitt auf, bei welchem die obere Anlagefläche 32 aus zwei in einem Winkel zueinander stehenden oberen Schenkelflächen 74 zur Anlage an dem oberen Klemmfinger 16 besteht. Dieser prismatische Querschnitt wirkt ähnlich wie der zuvor beschriebene prismatische Querschnitt im Bereich des unteren Klemmfingers 18 einer Verschiebung des Schneideinsatzes 12 in Querrichtung y entgegen.

Der prismatische Querschnitt ist im Bereich der unteren Anlagefläche 34 vorteilhaft über die gesamte Länge des Schneideinsatzes 12 ausgebildet, wobei der prismatische Querschnitt im Bereich der oberen Anlagefläche 32 lediglich im Bereich des halterseitigen Endes 52 des Schneideinsatzes 12 ausgebildet ist.

Das vorliegende Ausführungsbeispiel zeigt eine Gestaltung der oberen und unteren Schenkelflächen 72, 74 jeweils als Außenprisma. In weiteren Ausgestaltungen der vorliegenden Erfindung ist auch eine andere Ausführung als Innenprisma oder als Prisma mit mehreren Flächen denkbar, durch welche in Zusammenwirkung mit entsprechend ausgestalteten oberen und unteren Klemmflächen an dem oberen und unteren Klemmfinger 16, 18 eine vergleichbare Wirkung erreicht werden kann.

In einer vorteilhaften Ausgestaltung sind die oberen Schenkelflächen 74 ferner bezüglich der unteren Schenkelflächen 72 in Querrichtung y um wenige Zehntel versetzt. Dieser Versatz bedingt, dass Scherkräfte auftreten, welche einen stabileren Sitz des Schneideinsatzes 12 bewirken.

Fig. 9 zeigt einen Querschnitt durch das Werkzeug 10 in Längsrichtung x in demjenigen Bereich, in welchem der Schneideinsatz (nicht dargestellt) am oberen Klemmfinger 16 und am unteren Klemmfinger 18 anliegt. Auf der rechten Seite ist eine Vergrößerung eines auf der linken Seite markierten Bereiches dargestellt. Insbesondere zeigt sich dabei, dass der obere Klemmfinger 16 und der untere Klemmfinger 18 ebenfalls einen entsprechenden prismatischen Querschnitt aufweisen, welcher eine Aufnahme eines prismatisch beziehungsweise doppelprismatisch im Bereich seiner oberen und unteren Anlageflächen ausgebildeten Schneideinsatzes ermöglicht.

Es ist, wie in Fig. 9 dargestellt, ebenfalls möglich, dass die Aufnahmebereiche 76 am oberen Klemmfinger 16 und am unteren Klemmfinger 18 in Querrichtung y gegenüber einander versetzt ausgebildet sind. Hierdurch wird ein weiter stabilisierter Sitz des Schneideinsatzes 12 im Werkzeughalter 14 erreicht.

## Patentansprüche

1. Werkzeug (10) zur spanenden Bearbeitung eines Werkstücks, mit
- einem Schneideinsatz (12); und
- einem Werkzeughalter (14), welcher einen Grundkörper (15), einen oberen Klemmfinger (16) und einen unteren Klemmfinger (18) aufweist,
wobei sich der Grundkörper (15) im Wesentlichen entlang einer Längsrichtung (x) von einem halterseitigen Ende (22) zu einem werkstückseitigen Ende (24) erstreckt;
wobei zumindest ein Teil des unteren Klemmfingers (18) über das werkstückseitige Ende (24) des Grundkörpers (15) hervorspringt;
wobei der obere Klemmfinger (16) und der untere Klemmfinger (18) gemeinsam eine Aufnahme für den Schneideinsatz (12) bilden, in welcher der Schneideinsatz (12) derart festlegbar ist, dass der obere Klemmfinger (16) über eine an diesem angeordnete obere Klemmfläche (30) eine Klemmkraft auf den Schneideinsatz (12) ausübt;
wobei der hervorspringende Teil des unteren Klemmfingers (18) einen im Wesentlichen sichelförmigen oder bogenförmigen Querschnitt aufweist;
**dadurch gekennzeichnet, dass** zumindest ein Teil der oberen Klemmfläche (30) in Längsrichtung (x) betrachtet zwischen dem werkstückseitigen Ende (24) und dem halterseitigen Ende (22) des Grundkörpers (15) angeordnet ist und ein resultierender Kraftvektor (44) der Klemmkraft in einem Bereich einwirkt, der sich in Längsrichtung (x) betrachtet zwischen dem werkstückseitigen Ende (24) und dem halterseitigen Ende (22) des Grundkörpers (15) befindet.

2. Werkzeug (10) nach Anspruch 1, **dadurch gekennzeichnet, dass** zumindest die Hälfte der oberen Klemmfläche (30) in Längsrichtung (x) betrachtet zwischen dem werkstückseitigen Ende (24) und dem halterseitigen Ende (22) des Grundkörpers (15) angeordnet ist.

3. Werkzeug (10) nach Anspruch 1, **dadurch gekennzeichnet, dass** die gesamte obere Klemmfläche (30) in Längsrichtung (x) betrachtet zwischen dem werkstückseitigen Ende (24) und dem halterseitigen Ende (22) des Grundkörpers (15) angeordnet ist.

4. Werkzeug (10) nach einem der vorangegangenen Ansprüche, **dadurch gekennzeichnet, dass** sich der Schneideinsatz (12) im Wesentlichen entlang einer Längsachse (x') von einem halterseitigen Ende (48) des Schneideinsatzes (12) zu einem werkstückseitigen Ende (46) des Schneideinsatzes (12) erstreckt, einen werkstückseitigen Bereich (50) mit einer Schneidfläche (54) aufweist und einen halterseitigen Bereich (52) aufweist mit einer an einer Oberseite des Schneideinsatzes (12) angeordneten oberen Anlagefläche (32) zur Anlage an der oberen Klemmfläche (30) des oberen Klemmfingers (16) sowie mit einer an einer der oberen Anlagefläche (32) gegenüberliegenden Unterseite des Schneideinsatzes (12) angeordneten unteren Anlagefläche (34) zur Anlage an einer unteren Klemmfläche (36) des unteren Klemmfingers (18).

5. Werkzeug (10) nach Anspruch 4, **dadurch gekennzeichnet, dass** sich die untere Anlagefläche (34) entlang der Längsachse (x') im Wesentlichen über die gesamte Unterseite des Schneideinsatzes (12) im werkstückseitigen Bereich (50) und im halterseitigen Bereich (52) erstreckt, wobei sich die obere Anlagefläche (32) entlang der Längsachse (x') nur über einen Teil der Oberseite des Schneideinsatzes (12) im halterseitigen Bereich (52) erstreckt.

6. Werkzeug (10) nach einem der Ansprüche 4 oder 5, **dadurch gekennzeichnet, dass** im halterseitigen Bereich (52) des Schneideinsatzes (12) ein Abstand (70) zwischen der oberen Anlagefläche (32) und der unteren Anlagefläche (34) entlang der Längsachse (x') in Richtung zum halterseitigen Ende (48) des Schneideinsatzes (12) zunimmt.

7. Werkzeug (10) nach einem der Ansprüche 4 bis 6, **dadurch gekennzeichnet, dass** der Schneideinsatz (12) im werkstückseitigen Bereich (50) auf seiner der unteren Anlagefläche (34) gegenüberliegenden Oberseite ein im Wesentlichen als schräge Fläche ausgebildetes Spanleitelement (56) aufweist, welches mit der Längsachse (x') des Schneideinsatzes (12) einen sich in Richtung des halterseitigen Endes (48) des Schneideinsatzes (12) öffnenden Winkel von 5° bis 15° ausbildet.

8. Werkzeug (10) nach Anspruch 7, **dadurch gekennzeichnet, dass**, in einer Seitenansicht entlang der Längsachse (x') des Schneideinsatzes (12) betrachtet, eine maximale Höhe (60) des Spanleitelements (56) über der unteren Anlagefläche (34) größer ist, als eine minimale Höhe (62) einer der oberen Klemmfläche (30) abgewandten Oberseite des oberen Klemmfingers (16) über der unteren Klemmfläche (36) des unteren Klemmfingers (18).

9. Werkzeug (10) nach einem der Ansprüche 7 oder 8, **dadurch gekennzeichnet, dass** der Grundkörper (15) in einem Bereich zwischen dem oberen Klemmfinger (16) und dem unteren Klemmfinger (18) eine Anschlagfläche (62) für das halterseitige Ende (48) des Schneideinsatzes (12) aufweist, und ein Abstand (66) zwischen der Anschlagfläche (62) und einem dem Werkstück zugewandten Ende des oberen Klemmfingers (16) in Längsrichtung (x) des Grundkörpers (15) kleiner ist als ein Abstand (68) zwischen einem halterseitigen Ende des Spanleitelements (56) und dem halterseitigen Ende (48) des Schneideinsatzes (12) entlang der Längsachse (x') des Schneideinsatzes (12).

10. Werkzeug (10) nach einem der Ansprüche 4 - 9, **dadurch gekennzeichnet, dass** der Schneideinsatz (12) quer zur Längsachse (x') betrachtet im Bereich der oberen Anlagefläche (32) einen prismatischen Querschnitt aufweist, wobei die obere Anlagefläche (32) aus zwei in einem Winkel zueinander stehenden oberen Schenkelflächen (74) zur Anlage am dem oberen Klemmfinger (16) gebildet wird.

11. Werkzeug (10) nach einem der Ansprüche 4 - 10, **dadurch gekennzeichnet, dass** der Schneideinsatz (12) quer zur Längsachse (x') betrachtet im Bereich der unteren Anlagefläche (34) einen prismatischen Querschnitt aufweist, wobei die untere Anlagefläche (34) aus zwei in einem Winkel zueinander stehenden unteren Schenkelflächen (72) zur Anlage an dem unteren Klemmfinger (18) gebildet wird.

12. Werkzeug (10) nach den Ansprüchen 10 und 11, **dadurch gekennzeichnet, dass** in einem Querschnitt quer zur Längsachse (x') des Schneideinsatzes (12) die oberen Schenkelflächen (74) gegenüber den unteren Schenkelflächen (72) quer zur Längsachse (x') versetzt sind.

13. Werkzeug (10) nach einem der vorangegangenen Ansprüche, **dadurch gekennzeichnet, dass** das Werkzeug (10) zum axialen Einstechdrehen ausgebildet ist und der hervorspringende Teil des unteren Klemmfingers (18) einen im Wesentlichen sichelförmigen Querschnitt aufweist.

14. Werkzeug (10) nach Anspruch 13, **dadurch gekennzeichnet, dass** sichelförmige Querschnitt einen Außenradius (19) und einen Innenradius (21) aufweist, wobei der Innenradius (21) größer als der Außenradius (19) ist und ein Mittelpunkt eines dem Innenradius (21) zugeordneten Kreises nicht auf einem Mittelpunkt eines dem Außenradius (19) zugeordneten Kreises liegt.

15. Werkzeug (10) nach einem der vorangegangenen Ansprüche, **dadurch gekennzeichnet, dass** der Schneideinsatz (12) in der Aufnahme mittels eines Betätigungselements (20) festlegbar ist, wobei das Betätigungselement (20) als Spannschraube ausgebildet ist, welche durch eine Aussparung im oberen Klemmfinger (16) in ein Gewinde im Grundkörper (15) eingreift.

## Claims

1. A tool (10) for machining a workpiece, comprising
- a cutting insert (12); and
- a tool holder (14), which has a main body (15), an upper clamping finger (16) and a lower clamping finger (18),
wherein the main body (15) extends substantially along a longitudinal direction (x) from a holder-side end (22) to a workpiece-side end (24);
wherein at least a part of the lower clamping finger (18) projects over the workpiece-side end (24) of the main body (15);
wherein the upper clamping finger (16) and the lower clamping finger (18) jointly form a receiving fixture for the cutting insert (12), in which the cutting insert (12) is securable such that the upper clamping finger (16), via an upper clamping surface (30) disposed thereon, exerts a clamping force on the cutting insert (12),
wherein the projecting part of the lower clamping finger (18) has a substantially crescent-shaped or arc-shaped cross section;
**characterized in that** at least a part of the upper clamping surface (30), considered along the longitudinal direction (x), is disposed between the workpiece-side end (24) and the holder-side end (22) of the main body (15), and a resultant force vector (44) of the clamping force acts in a region which, considered along the longitudinal direction (x), is located between the workpiece-side end (24) and the holder-side end (22) of the main body (15).

2. The tool (10) as claimed in claim 1, **characterized in that** at least half of the upper clamping surface (30), considered along the longitudinal direction (x), is disposed between the workpiece-side end (24) and the holder-side end (22) of the main body (15).

3. The tool (10) as claimed in claim 1, **characterized in that** the entire upper clamping surface (30), considered along the longitudinal direction (x), is disposed between the workpiece-side end (24) and the holder-side end (22) of the main body (15).

4. The tool (10) as claimed in one of the preceding claims, **characterized in that** the cutting insert (12) extends substantially along a longitudinal axis (x') from a holder-side end (48) of the cutting insert (12) to a workpiece-side end (46) of the cutting insert (12), has a workpiece-side region (50) having a cutting surface (54), and a holder-side region (52), having an upper bearing surface (32), disposed on a top side of the cutting insert (12), for bearing against the upper clamping surface (30) of the upper clamping finger (16), and having a lower bearing surface (34), disposed on a bottom side, lying opposite the upper bearing surface (32), of the cutting insert (12), for bearing against a lower clamping surface (36) of the lower clamping finger (18).

5. The tool (10) as claimed in claim 4, **characterized in that** the lower bearing surface (34) extends along the longitudinal axis (x') substantially over the entire bottom side of the cutting insert (12) in the workpiece-side region (50) and in the holder-side region (52), wherein the upper bearing surface (32) extends along the longitudinal axis (x') only over a part of the top side of the cutting insert (12) in the holder-side region (52).

6. The tool (10) as claimed in one of claims 4 or 5, **characterized in that**, in the holder-side region (52) of the cutting insert (12), a distance (70) between the upper bearing surface (32) and the lower bearing surface (34) increases along the longitudinal axis (x') in the direction of the holder side end (48) of the cutting insert (12).

7. The tool (10) as claimed in one of claims 4 to 6, **characterized in that** the cutting insert (12) has in the workpiece-side region (50), on its top side lying opposite the lower bearing surface (34), a chip guiding element (56), which is configured substantially as an oblique surface and forms with the longitudinal axis (x') of the cutting insert (12) an angle of 5° to 15° that opens in the direction of the holder-side end (48) of the cutting insert (12).

8. The tool (10) as claimed in claim 7, **characterized in that**, viewed in a side view along the longitudinal axis (x') of the cutting insert (12), a maximum height (60) of the chip guiding element (56) above the lower bearing surface (34) is larger than a minimum height (62) of a top side, facing away from the upper clamping surface (30), of the upper clamping finger (16) above the lower clamping surface (36) of the lower clamping finger (18).

9. The tool (10) as claimed in one of claims 7 or 8, **characterized in that** the main body (15) has, in a region between the upper clamping finger (16) and the lower clamping finger (18), a stop face (62) for the holder-side end (48) of the cutting insert (12), and a distance (66) between the stop face (62) and a workpiece-facing end of the upper clamping finger (16) in the longitudinal direction (x) of the main body (15) is smaller than a distance (68) between a holder-side end of the chip guiding element (56) and the holder-side end (48) of the cutting insert (12) along the longitudinal axis (x') of the cutting insert (12).

10. The tool (10) as claimed in one of claims 4-9, **characterized in that** the cutting insert (12), viewed transversely to the longitudinal axis (x'), has in a region of the upper bearing surface (32) a prismatic cross section, wherein the upper bearing surface (32) is formed of two mutually angled upper leg faces (74) for bearing against the upper clamping finger (16).

11. The tool (10) as claimed in one of claims 4-10, **characterized in that** the cutting insert (12), viewed transversely to the longitudinal axis (x'), has in a region of the lower bearing surface (34) a prismatic cross section, wherein the lower bearing surface (34) is formed of two mutually angled lower leg faces (72) for bearing against the lower clamping finger (18).

12. The tool (10) as claimed in claims 10 and 11, **characterized in that**, in a cross section transversely to the longitudinal axis (x') of the cutting insert (12), the upper leg faces (74) are offset in relation to the lower leg faces (72) transversely to the longitudinal axis (x').

13. The tool (10) as claimed in one of the preceding claims, **characterized in that** the tool (10) is configured for axial grooving, and the projecting part of the lower clamping finger (18) has a substantially crescent-shaped cross section.

14. The tool (10) as claimed in claim 13, **characterized in that** the crescent-shaped cross section has an outside radius (19) and an inside radius (21), the inside radius (21) being larger than the outside radius (19), and a center point of a circle assigned to the inside radius (21) does not lie on a center point of a circle assigned to the outside radius (19).

15. The tool (10) as claimed in one of the preceding claims, **characterized in that** the cutting insert (12) is securable in the receiving fixture by means of an actuating element (20), wherein the actuating element (20) is configured as a clamping screw, which, through a recess in the upper clamping finger (16), engages in a thread in the main body (15).

## Revendications

1. Outil (10) de traitement d'une pièce par enlèvement de matière, l'outil présentant
une garniture de coupe (12) et
un porte-outil (14) qui présente un corps de base (15), un doigt supérieur de serrage (16) et un doigt inférieur de serrage (18),
le corps de base (15) s'étendant essentiellement le long d'une direction longitudinale (x) depuis une extrémité (22) située côté support jusqu'à une extrémité (24) située côté pièce,
au moins une partie du doigt inférieur de serrage (18) débordant au-delà de l'extrémité (24) du corps de base (15) située côté pièce,
le doigt supérieur de serrage (16) et le doigt inférieur de serrage (18) formant pour la garniture de coupe (12) un logement dans lequel la garniture de coupe (12) peut être immobilisée par le fait que le doigt supérieur de serrage (16) exerce sur la garniture de coupe (12) une force de serrage par l'intermédiaire d'une surface supérieure de serrage (30) disposée sur lui,
la partie en débord du doigt inférieur de serrage (18) présentant une section transversale essentiellement en forme de croissant ou d'arc de cercle,
**caractérisé en ce que**
au moins une partie de la surface supérieure de serrage (30) est disposée dans la direction longitudinale (x) entre l'extrémité (24) du corps de base (15) située côté pièce et son extrémité (22) située côté support et le vecteur (44) de la résultante de la force applique la force de serrage sur une partie située dans la direction longitudinale (x) entre l'extrémité (24) du corps de base (15) située côté pièce et son extrémité (22) située côté support.

2. Outil (10) selon la revendication 1, **caractérisé en ce qu'**au moins la moitié de la surface supérieure de serrage (30) est disposée dans la direction longitudinale (x) entre l'extrémité (24) du corps de base (15) située côté pièce et son extrémité (22) située côté support.

3. Outil (10) selon la revendication 1, **caractérisé en ce que** la totalité de la surface supérieure de serrage (30) est disposée dans la direction longitudinale (x) entre l'extrémité (24) du corps de base (15) située côté pièce et son extrémité (22) située côté support.

4. Outil (10) selon l'une des revendications précédentes, **caractérisé en ce que** la garniture de coupe (12) s'étend essentiellement le long d'un axe longitudinal (x') entre une extrémité (48) de la garniture de coupe (12) située côté support et une extrémité (46) de la garniture de coupe (12) située côté pièce, présente une partie (50) située côté pièce et dotée d'une surface de coupe (54) et une partie (52) située côté support qui présente une surface supérieure de pose (32), disposée sur le côté supérieur de la garniture de coupe (12) et servant à poser la surface supérieure de serrage (30) du doigt supérieur de serrage (16), ainsi qu'une surface inférieure de pose (34) disposée sur un côté de la garniture de coupe (12) située face à la surface supérieure de pose (32) et destinée à se placer sur une surface inférieure de serrage (36) du doigt inférieur de serrage (18).

5. Outil (10) selon la revendication 4, **caractérisé en ce que** la surface inférieure de pose (34) s'étend le long de l'axe longitudinal (x') essentiellement surtout le côté inférieur de la garniture de coupe (12) dans la partie (50) située côté pièce et dans la partie (52) située côté support, la surface supérieure de pose (32) s'étendant le long de l'axe longitudinal (x') sur seulement une partie du côté supérieur de la garniture de coupe (12) dans la partie (52) située côté support.

6. Outil (10) selon l'une des revendications 4 ou 5, **caractérisé en ce que** la distance (70) entre la surface supérieure de pose (32) et la surface inférieure de pose (34) augmente dans la partie (52) de la garniture de coupe (12) située côté support suivant l'axe longitudinal (x') en direction de l'extrémité (48) de la garniture de coupe (12) située côté support.

7. Outil (10) selon l'une des revendications 4 à 6, **caractérisé en ce que** la garniture de coupe (12) présente dans la partie (50) située côté pièce, sur son côté supérieur situé face à la surface inférieure de pose (34), un élément (56) de guidage de copeaux configuré qu'essentiellement comme surface oblique et qui forme avec l'axe longitudinal (x') de la garniture de coupe (12) un angle de 5° à 15° qui s'ouvre en direction de l'extrémité (48) de la garniture de coupe (12) située côté support.

8. Outil (10) selon la revendication 7, **caractérisé en ce que** dans une vue latérale suivant l'axe longitudinal (x') de la garniture de coupe (12), la hauteur maximale (60) de l'élément (56) de guidage de copeaux est plus grande sur la surface inférieure de pose (34) que la hauteur minimale (62) du côté supérieur du doigt supérieur de serrage (16), non tourné vers la surface supérieure de serrage (30), sur la surface inférieure de serrage (36) du doigt inférieur de serrage (18).

9. Outil (10) selon l'une des revendications 7 ou 8, **caractérisé en ce que** le corps de base (15) présente dans une partie située entre le doigt supérieur de serrage (16) et le doigt inférieur de serrage (18) une surface de butée (62) pour l'extrémité (48) de la garniture de coupe (12) située côté support et entre la surface de butée (62) et l'extrémité du doigt supérieur de serrage (16) tournée vers la pièce une distance (66) dans le sens de la longueur (x) du corps de base (15) inférieure à la distance (68) entre l'extrémité de l'élément (56) de guidage de copeaux située côté support et l'extrémité (48) de la garniture de coupe (12) située côté support le long de l'axe longitudinal (x') de la garniture de coupe (12).

10. Outil (10) selon l'une des revendications 4 à 9, **caractérisé en ce que** la garniture de coupe (12) présente transversalement par rapport à l'axe longitudinal (x'), au niveau de la surface supérieure de pose (32), une section transversale prismatique, la surface supérieure de pose (32) étant formée de deux surfaces (74) d'aile supérieure formant un angle l'une avec l'autre et destinées à se placer sur le doigt supérieur de serrage (16).

11. Outil (10) selon l'une des revendications 4 à 10, **caractérisé en ce que** transversalement par rapport à l'axe longitudinal (x'), la garniture de coupe (12) présente au niveau de la surface inférieure de pose (34) une section transversale prismatique, la surface inférieure de pose (34) étant formée de deux surfaces (72) d'aile inférieure formant un angle l'une avec l'autre et destinées à se placer sur le doigt inférieur de serrage (18).

12. Outil (10) selon les revendications 10 et 11, **caractérisé en ce que** dans une coupe transversale par rapport à l'axe longitudinal (x') de la garniture de coupe (12), les surfaces (74) d'aile supérieure sont décalées transversalement par rapport à l'axe longitudinal x' par rapport aux surfaces (72) d'aile inférieure.

13. Outil (10) selon l'une des revendications précédentes, **caractérisé en ce que** l'outil (10) est configuré pour opérer une rectification axiale rotative et **en ce que** la partie en saillie du doigt inférieur de serrage (18) présente une section transversale essentiellement en forme de croissant.

14. Outil (10) selon la revendication 13, **caractérisé en ce que** la section transversale en forme de croissant présente un rayon extérieur (19) et un rayon intérieur (21), le rayon inférieur (21) étant supérieur au rayon extérieur (19), et **en ce que** le centre du cercle associé au rayon intérieur (21) n'est pas situé sur le centre du cercle associé au rayon extérieur (19).

15. Outil (10) selon l'une des revendications précédentes, **caractérisé en ce que** la garniture de coupe (12) peut être immobilisée dans le logement au moyen d'un élément d'actionnement (20), l'élément d'actionnement (20) étant configuré comme vis de serrage qui engage un filet ménagé dans le corps de base (15) par une découpe ménagée dans le doigt supérieur de serrage (16).
